# EUROPEAN PATENT APPLICATION

(11) **EP 4 528 896 A1**
(43) Date of publication of application: **26.03.2025**
(21) Application number: 24191910.9
(22) Date of filing: 30.07.2024
(51) Int. Cl.: H01M 50/209, H01M 50/249, H01M 50/296, H01M 50/50, H01M 50/503, H01M 50/507

(54) **BATTERY MODULE AND ELECTRIC DEVICE**

(30) Priority: 31.07.2023 CN 202310952680
(71) Applicant: Xiamen Ampack Technology Limited, Xiamen City, Fujian Province, 361000 (CN)
(72) Inventor: YU, Lvshi, Xiamen City, Fujian Province, People s Republic of China, 361000 (CN); WANG, Xin, Xiamen City, Fujian Province, People s Republic of China, 361000 (CN); ZHANG, Weidong, Xiamen City, Fujian Province, People s Republic of China, 361000 (CN); WU, Kai, Xiamen City, Fujian Province, People s Republic of China, 361000 (CN)
(74) Representative: Icosa

(57) **Abstract**

A battery module (100) includes a housing (10), a connecting member (30), and a cell assembly (20). The housing (10) includes a first wall (11), and the first wall (11) is provided with an accommodating cavity (115). The connecting member (30) includes a first part (31) and a second part (36) connected to each other, and the first part (31) is disposed in the accommodating cavity (115). The cell assembly (20) includes a conductive member (22) and a plurality of cells (21), where each cell (21) includes an electrode terminal (212), and the conductive member (22) connects one electrode terminal (212) and the second part (36) of the connecting member (30). The first part (31) is configured to be movable in the accommodating cavity (115). In the foregoing battery module (100), the first part (31) of the connecting member (30) is disposed in the accommodating cavity (115) of the first wall (11), and the second part (36) is connected to the electrode terminal (212) through the conductive member (22), so that when the cell assembly (20) moves relative to the housing (10), the pulling force of the conductive member (22) on the electrode terminal (212) is reduced, and the risk of damage to the electrode terminal (212) is reduced.

## Description

### TECHNICAL FIELD

This application pertains to the field of energy storage technologies, and in particular relates to a battery module and an electric device.

### BACKGROUND

With the rapid development of the new energy industry, battery modules are gradually used in various industries, and their working environments are becoming increasingly complex. When the battery modules shake due to transportation or collision, electrode terminals of cells may be pulled.

### SUMMARY

In view of the foregoing situation, it is necessary to provide a battery module, so as to reduce the influence on an electrode terminal from a cell assembly moving relative to a housing.

an embodiment of this application provides a battery module including a housing, a connecting member, and a cell assembly, where the housing includes a first wall, and the first wall is provided with an accommodating cavity. The connecting member includes a first part and a second part connected to each other, and the first part is disposed in the accommodating cavity. The cell assembly includes a conductive member and a plurality of cells, where each cell includes an electrode terminal, and the conductive member connects the electrode terminal of one of the plurality of cells to the second part of the connecting member. The first part is configured to be movable in the accommodating cavity.

In the foregoing battery module, the first part of the connecting member is disposed in the accommodating cavity of the first wall, and the second part is connected to the electrode terminal through the conductive member, so that when the cell assembly moves relative to the housing, the pulling force of the conductive member on the electrode terminal is reduced, and the risk of damage to the electrode terminal is reduced.

In some embodiments of this application, the battery module includes a first gap; the first wall includes a first side wall and a third side wall arranged along a first direction; along the first direction, the first gap is located between the first part and the first side wall, and/or between the first part and the third side wall; and the first part is configured to be movable in the accommodating cavity along the first direction or a direction opposite to the first direction. When the cell assembly moves relative to the housing along the first direction or the direction opposite to the first direction, or the cell assembly swells along the first direction or the direction opposite to the first direction, the first gap allows the connecting member to move relative to the first wall along the first direction or the direction opposite to the first direction, so that the pulling force of the conductive member on the electrode terminal is reduced, and the risk of damage to the electrode terminal is reduced.

In some embodiments of this application, along the first direction, a length of the first gap is d1, and 0 mm < d1 ≤ 4 mm. This is conducive to meeting the requirement for the movement of the connecting member relative to the first wall, and reducing the risk of damage to the electrode terminal. In addition, this can also limit the movement of the connecting member relative to the first wall, reducing the influence on the electrode terminal from the connecting member moving relative to the first wall.

In some embodiments of this application, 0.5 mm ≤ d1 ≤ 2 mm. This is conducive to further reducing the risk of damage to the electrode terminal, reducing a movement range of the connecting member relative to the first wall, reducing the size of the first wall along the first direction, reducing the influence of the first wall on an external contour size of the battery module, and increasing the energy density of the battery module.

In some embodiments of this application, the first wall is provided with a first stop portion; the connecting member is provided with a first limiting portion; and the first stop portion and the first limiting portion are arranged along a second direction. The battery module includes a second gap, and the second gap is located between the first stop portion and the first limiting portion; and the first part is configured to be movable along a direction opposite to the second direction. When the cell assembly moves relative to the housing along the direction opposite to the second direction, the second gap allows the connecting member and the conductive member to move along the direction opposite to the second direction, so that the pulling force of the conductive member on the electrode terminal is reduced, and the risk of damage to the electrode terminal is reduced.

In some embodiments of this application, along the second direction, a length of the second gap is d2, and 0 mm < d2 ≤ 4 mm. This is conducive to meeting the requirement for the movement of the connecting member relative to the first wall, and reducing the risk of damage to the electrode terminal. In addition, this can also limit the movement of the connecting member relative to the first wall, reducing the influence on the electrode terminal from the connecting member moving relative to the first wall.

In some embodiments of this application, 0.5 mm ≤ d2 ≤ 2 mm. This is conducive to further reducing the risk of damage to the electrode terminal, reducing a movement range of the connecting member along the direction opposite to the second direction, and reducing the influence on the electrode terminal from the connecting member moving relative to the first wall.

In some embodiments of this application, the second part is located outside the accommodating cavity; the battery module includes a third gap; the first wall includes a first extension portion and a second extension portion arranged along a third direction; the third gap is located between the second part and the first extension portion, and/or between the second part and the second extension portion; and the connecting member is configured to be movable along the third direction or a direction opposite to the third direction. When the cell assembly moves relative to the housing along the third direction or the direction opposite to the third direction, the third gap allows the connecting member and the conductive member to move relative to the first wall, so that the pulling force of the conductive member on the electrode terminal is reduced, and the risk of damage to the electrode terminal is reduced.

In some embodiments of this application, along the third direction, a length of the third gap is d3, and 0 mm < d3 ≤ 4 mm. This is conducive to meeting the requirement for the movement of the connecting member relative to the first wall, and reducing the risk of damage to the electrode terminal. In addition, this can also limit the movement of the connecting member relative to the first wall, reducing the influence on the electrode terminal from the connecting member moving relative to the first wall.

In some embodiments of this application, 0.5 mm ≤ d3 ≤ 2 mm. This is conducive to further reducing the risk of damage to the electrode terminal, reducing a movement range of the connecting member along the third direction or the direction opposite to the third direction, and reducing the influence on the electrode terminal from the connecting member moving relative to the first wall.

In some embodiments of this application, the connecting member is provided with a recess. This is conducive to reducing the weight of the connecting member, thereby reducing the influence of the weight of the connecting member on the battery module. This is also conducive to alleviating the shrinkage of the connecting member after injection molding, thereby alleviating undesirable appearance of the connecting member. This is further conducive to increasing the creepage distance and electrical gap of the conductive member, thereby improving the safety performance of the battery module.

In some embodiments of this application, along the first direction, a minimum depth of the recess is greater than 1 mm, which is conducive to increasing the creepage distance and electrical gap of the conductive member, thereby improving the safety performance of the battery module.

In some embodiments of this application, the connecting member is further provided with a rib portion, and the rib portion is connected to a side wall of the recess. The rib portion is conducive to improving the structural rigidity and strength of the connecting member, thereby reducing the risk of deformation or damage to the connecting member. In addition, the rib portion is also conducive to increasing the creepage distance of the conductive member, thereby improving the safety performance of the battery module.

In some embodiments of this application, a minimum width of the rib portion is greater than 1 mm, which is conducive to ensuring both the structural strength and creepage distance of the connecting member, and reducing the influence of the rib portion on the weight of the connecting member.

In some embodiments of this application, the battery module further includes a fastener, and the fastener connects the conductive member and the second part, which is conducive to improving the stability of the connection between the conductive member and the connecting member, thereby improving the shock resistance of the battery module.

In some embodiments of this application, the first wall and the cell assembly are arranged along the first direction; the plurality of cells are arranged along the first direction; the cell includes a cell housing and an electrode assembly, where the cell housing includes a body portion and a sealing portion, and the electrode terminal is connected to the electrode assembly and extends out of the cell housing from the sealing portion; and the conductive member is connected to the electrode terminal in a stacking manner, facilitating the connection between the conductive member and the electrode terminal.

In some embodiments of this application, the conductive member includes a first segment, a second segment, and a third segment; the second segment connects the first segment and the third segment; the first segment is connected to the electrode terminal of the one of the plurality of cells; the one of the plurality of cells being a cell closest to the first wall; the third segment is connected to the second part; and along the first direction, a projection of the first segment and a projection of the third segment are spaced apart from each other. When the cell swells or moves relative to the housing, the deformation of the second segment can buffer the interaction force between the first segment and the third segment, reducing the pulling force of the first segment on the electrode terminal, thereby helping to prolong the service life of the electrode terminal.

In some embodiments of this application, the battery module includes two first walls and two connecting members, where the two first walls are arranged along the first direction, and the cell assembly is located between the two first walls. The cell assembly includes two conductive members, where the two conductive members are respectively located at two ends of the cell assembly along the first direction. Each conductive member is connected to one connecting member, and the first part of each connecting member is located in an accommodating cavity of a first wall adjacent thereto. When the cell assembly moves relative to the housing, the cell assembly is connected to first walls of two sides through the two conductive members, which is conducive to further reducing the pulling force of the conductive member on the electrode terminal and reducing the risk of damage to the electrode terminal.

In some embodiments of this application, the battery module further includes a circuit board and a sampling terminal, where the sampling terminal is connected to the circuit board and the electrode terminal, and the sampling terminal is configured to collect electrical signal information of different cells.

In some embodiments of this application, the second segment is connected to the circuit board, and the circuit board can collect electrical signal information of the conductive member.

an embodiment of this application further provides an electric device including the battery module according to any one of the foregoing some embodiments.

In the foregoing electric device, for the battery module, the first part of the connecting member is disposed in the accommodating cavity of the first wall, and the second part is connected to the electrode terminal through the conductive member, so that when the cell assembly moves relative to the housing, the pulling force of the conductive member on the electrode terminal is reduced, the risk of damage to the electrode terminal is reduced, and the influence on the electric device from the damage to the electrode terminal is reduced.

### BRIEF DESCRIPTION OF DRAWINGS

FIG. 1 is a schematic structural diagram of a battery module according to an embodiment of this application.
FIG. 2 is an exploded view of a battery module according to an embodiment of this application.
FIG. 3 is a cross-sectional view of a battery module along a direction perpendicular to a third direction according to an embodiment of this application.
FIG. 4 is an enlarged view of region IV in FIG. 3.
FIG. 5 is a schematic structural diagram of a first wall according to an embodiment of this application.
FIG. 6 is a schematic structural diagram of a cell according to an embodiment of this application.
FIG. 7 is a cross-sectional view of a battery module along a direction perpendicular to a second direction according to an embodiment of this application.
FIG. 8 is an enlarged view of region VIII in FIG. 7.
FIG. 9 is a schematic structural diagram of a connecting member and a nut before assembly according to an embodiment of this application.
FIG. 10 is a schematic structural diagram of a connecting member and a nut being interconnected according to an embodiment of this application.
FIG. 11 is a view of a battery module along a second direction according to an embodiment of this application.
FIG. 12 is a schematic structural diagram of a conductive member according to an embodiment of this application.
FIG. 13 is a schematic structural diagram of a fourth wall according to an embodiment of this application.
FIG. 14 is a schematic structural diagram of an electric device according to an embodiment of this application.

Reference signs of main components

| | |
|---|---|
| Battery module | 100 |
| Housing | 10 |
| First wall | 11 |
| First side wall | 111 |
| Opening | 1111 |
| Second side wall | 112 |
| Third side wall | 113 |
| Fourth side wall | 114 |
| Accommodating cavity | 115 |
| First stop portion | 117 |
| First extension portion | 118 |
| Second extension portion | 119 |
| Second wall | 12 |
| Third wall | 13 |
| Fourth wall | 14 |
| Second through hole | 141 |
| Isolation portion | 140 |
| Fifth wall | 15 |
| Cell assembly | 20 |
| Cell | 21 |
| Cell housing | 211 |
| Body portion | 2110 |
| Sealing portion | 2111 |
| Electrode terminal | 212 |
| First electrode terminal | 2121 |
| Second electrode terminal | 2122 |
| Conductive member | 22 |
| First segment | 221 |
| Second segment | 222 |
| Third segment | 223 |
| First through hole | 224 |
| Positive terminal | 23 |
| Negative terminal | 24 |
| Connecting member | 30 |
| First part | 31 |
| First limiting portion | 312 |
| Second limiting portion | 313 |
| Third limiting portion | 314 |
| Recess | 33 |
| Rib portion | 34 |
| Nut | 35 |
| Second part | 36 |
| First gap | 41 |
| Second gap | 42 |
| Third gap | 43 |
| Fastener | 50 |
| Circuit board | 60 |
| Sampling terminal | 71 |
| Wire harness | 72 |
| Electric device | 200 |
| First direction | X |
| Second direction | Y |
| Third direction | Z |

This application will be further described with reference to the accompanying drawings in the following specific some embodiments.

### DESCRIPTION OF EMBODIMENTS

The following describes the technical solutions in some embodiments of this application with reference to the accompanying drawings in these embodiments of this application. Apparently, the described some embodiments are some but not all embodiments of this application.

It should be noted that when one component is assumed as being "connected to" another component, it may be connected to the another component directly or with a component possibly present therebetween. When one component is assumed as being "disposed on/in" another component, the component may be provided directly on/in the another component or with a component possibly present therebetween. In this application, unless otherwise specified and defined explicitly, the term "connection" should be understood in its general sense. For example, it may refer to a fixed connection, a detachable connection, or an integral connection, may refer to a mechanical connection or an electrical connection, and may refer to a direct connection, an indirect connection via an intermediate medium, or an internal communication between two elements. Persons of ordinary skills in the art can understand specific meanings of the foregoing term in this application as appropriate to specific situations.

Unless otherwise defined, all technical and scientific terms used herein shall have the same meanings as commonly understood by persons skilled in the art to which this application pertains. The terms used herein in the specification of this application are for description of specific some embodiments only without any intention to limit this application.

In the description of some embodiments of this application, the terms "first", "second", and the like are merely intended to distinguish between different objects, and shall not be understood as any indication or implication of relative importance or any implicit indication of the number, sequence or primary-secondary relationship of the technical features indicated. In the description of some embodiments of this application, "a plurality of" means at least two unless otherwise specifically stated.

Reference to "embodiment" in this application means that specific features, structures, or characteristics described with reference to some embodiments may be included in at least one embodiment of this application. The word "embodiment" appearing in various places in the specification does not necessarily refer to the same embodiment or an independent or alternative embodiment that is exclusive of other embodiments. In absence of conflicts, various embodiments in this application may be combined with each other.

It should be noted that, as shown in the accompanying drawings, sizes such as thickness, length, and width of various components and sizes such as overall thickness, length, and width of integrated apparatuses in some embodiments of this application are merely for illustrative purposes and should not constitute any limitations on this application.

an embodiment of this application provides a battery module including a housing, a connecting member, and a cell assembly, where the housing includes a first wall, and the first wall is provided with an accommodating cavity. The connecting member includes a first part and a second part connected to each other, and the first part is disposed in the accommodating cavity. The cell assembly includes a conductive member and a plurality of cells, where each cell includes an electrode terminal, and the conductive member connects the electrode terminal of one of the plurality of cells to the second part of the connecting member. The first part is configured to be movable in the accommodating cavity.

In the foregoing battery module, the first part of the connecting member is disposed in the accommodating cavity of the first wall, and the second part is connected to the electrode terminal through the conductive member, so that when the cell assembly moves relative to the housing, the pulling force of the conductive member on the electrode terminal is reduced, and the risk of damage to the electrode terminal is reduced.

The following further describes some embodiments of this application with reference to the accompanying drawings.

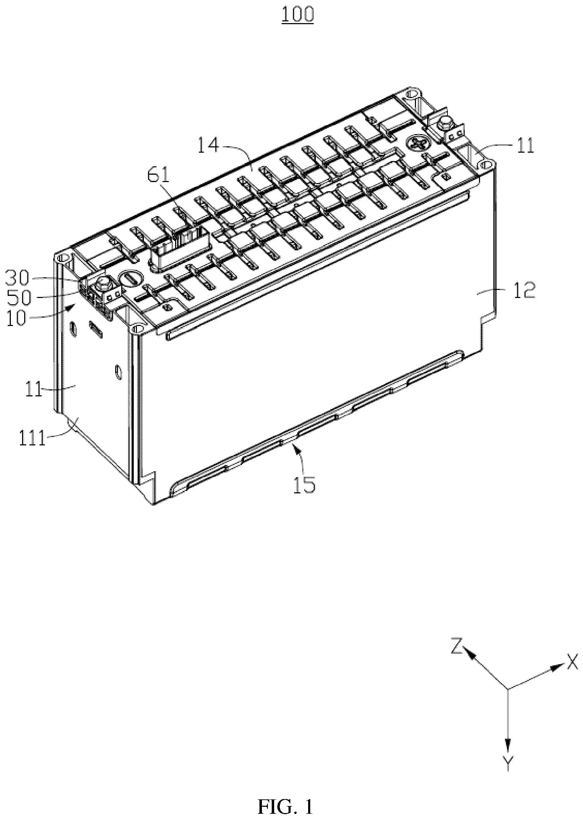

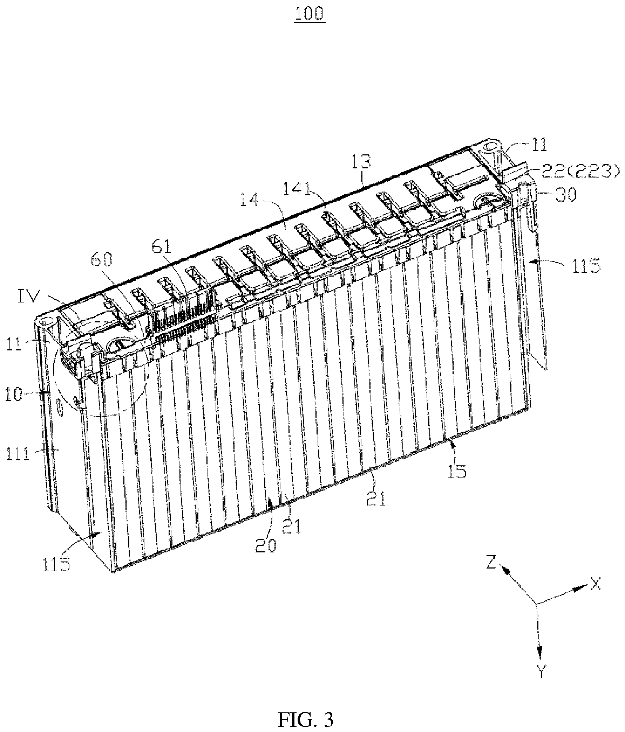

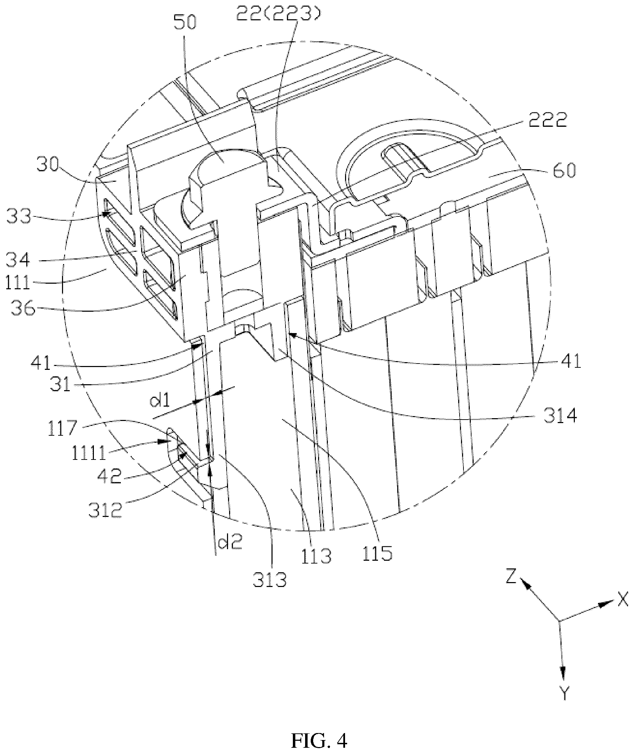

As shown in FIGs. 1 to 5, an embodiment of this application provides a battery module 100 including a housing 10, a connecting member 30, and a cell assembly 20, where the cell assembly 20 is disposed in the housing 10.

The housing 10 includes a first wall 11, and the first wall 11 is provided with an accommodating cavity 115. The connecting member 30 includes a first part 31 and a second part 36 connected to each other, and the first part 31 is disposed in the accommodating cavity 115. The cell assembly 20 includes a conductive member 22 and a plurality of cells 21, where each cell 21 includes an electrode terminal 212, and the conductive member 22 connects the electrode terminal 212 of one of the plurality of cells 21 to the second part 36. The first part 31 is configured to be movable in the accommodating cavity 115.

In the foregoing battery module 100, the first part 31 of the connecting member 30 is disposed in the accommodating cavity 115 of the first wall 11, and the second part 36 is connected to the electrode terminal 212 through the conductive member 22, so that when the cell assembly 20 moves relative to the housing 10, the pulling force of the conductive member 22 on the electrode terminal 212 is reduced, and the risk of damage to the electrode terminal 212 is reduced.

In an embodiment, the connecting member 30 is configured to input or output electrical energy of the cell assembly 20.

In an embodiment, the first wall 11 and the cell assembly 20 are arranged along a first direction X, and the plurality of cells 21 are arranged along the first direction X.

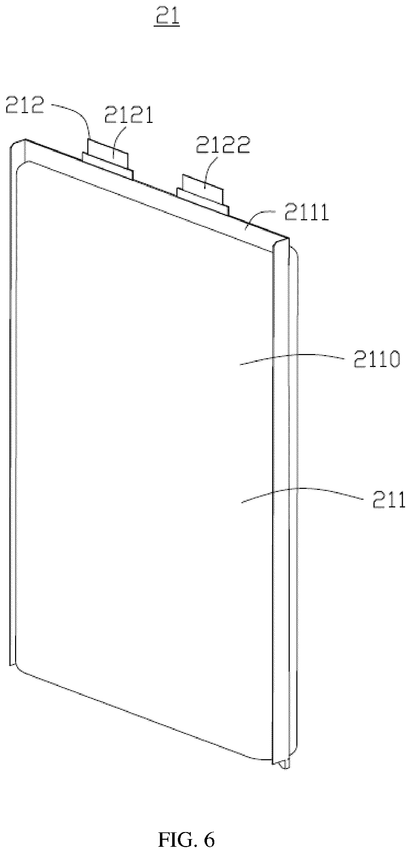

Referring to FIG. 6, in an embodiment, each cell 21 includes a cell housing 211 and an electrode assembly (not shown in the figure). The electrode assembly is located in the cell housing 211. One portion of the electrode terminal 212 is located in the cell housing 211 and connected to the electrode assembly, and another portion of the electrode terminal 212 extends out of the cell housing 211. Optionally, the cell 21 includes a pouch cell. Optionally, the cell housing 211 includes an aluminum-plastic film.

In an embodiment, the cell housing 211 includes a body portion 2110 and a sealing portion 2111. The electrode assembly is located in the body portion 2110. The electrode terminal 212 is connected to the electrode assembly and extends out of the cell housing 211 from the sealing portion 2111.

The electrode terminal 212 of each cell 21 includes a first electrode terminal 2121 and a second electrode terminal 2122. One of the first electrode terminal 2121 and the second electrode terminal 2122 is a positive electrode terminal, and the other is a negative electrode terminal.

At least some cell housings 211 are arranged along the first direction X. Adjacent cells 21 are electrically connected to each other through interconnection of electrode terminals 212.

In an embodiment, along a second direction Y, the conductive member 22 and one electrode terminal 212 are connected to each other in a stacking manner, facilitating the connection of the conductive member 22 to the electrode terminal 212. The second direction Y is perpendicular to the first direction X. In an embodiment, the conductive member 22 and one electrode terminal 212 are connected to each other through welding.

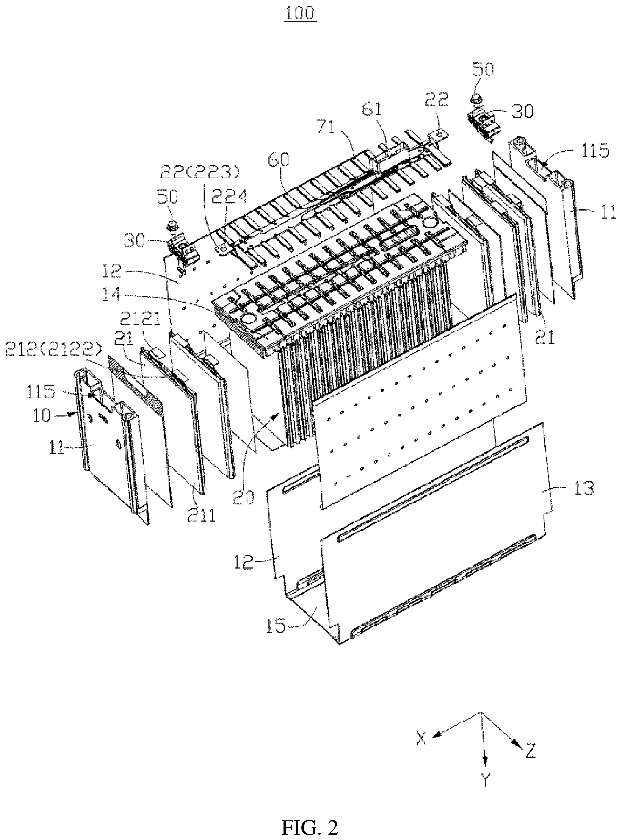

As shown in FIGs. 2 to 5, in an embodiment, the battery module 100 includes a first gap 41. The first part 31 is configured to be movable in the accommodating cavity 115 along the first direction X or a direction opposite to the first direction X. When the cell assembly 20 moves relative to the housing 10 along the first direction X or the direction opposite to the first direction X, or the cell assembly 20 swells along the first direction X or the direction opposite to the first direction X, the first gap 41 allows the connecting member 30 to move relative to the first wall 11 along the first direction X or the direction opposite to the first direction X, so that the pulling force of the conductive member 22 on the electrode terminal 212 along the first direction X or the direction opposite to the first direction X is reduced, and the risk of damage to the electrode terminal 212 is reduced.

In an embodiment, the first wall 11 includes a first side wall 111 and a third side wall 113 arranged along the first direction X; and along the first direction X, the first gap 41 is located between the first part 31 and the first side wall 111, and/or between the first part 31 and the third side wall 113.

In an embodiment, along the first direction X, a length of the first gap 41 is d1, and 0 mm < d1 ≤ 4 mm. This is conducive to the movement of the connecting member 30 relative to the first wall 11, and reducing the risk of damage to the electrode terminal 212. In addition, this can also limit the movement of the connecting member 30 relative to the first wall 11, reducing the influence of the connecting member 30 on the electrode terminal 212.

In an embodiment, 0.5 mm ≤ d1 ≤ 2 mm. This is conducive to further reducing the risk of damage to the electrode terminal 212, reducing a movement range of the connecting member 30 relative to the first wall 11, reducing the size of the first wall 11 along the first direction X, reducing the influence of the first wall 11 on an external contour size of the battery module 100, and increasing the energy density of the battery module 100.

In an embodiment, the length d1 of the first gap 41 is any one of 0.2 mm, 0.4 mm, 0.5 mm, 0.6 mm, 0.8 mm, 1 mm, 1.2 mm, 1.4 mm, 1.6 mm, 1.8 mm, 2 mm, 2.2 mm, 2.4 mm, 2.6 mm, 2.8 mm, 3 mm, 3.2 mm, 3.4 mm, 3.6 mm, 3.8 mm, or 4 mm. This is conducive to the movement of the connecting member 30 relative to the first wall 11, and reducing the risk of damage to the electrode terminal 212. In addition, this can also limit the movement of the connecting member 30 relative to the first wall 11, reducing the influence on the electrode terminal 212 from the connecting member 30 shaking relative to the first wall 11.

In an embodiment, the first wall 11 includes a second side wall 112 and a fourth side wall 114 arranged along a third direction Z. The first side wall 111, the second side wall 112, the third side wall 113, and the fourth side wall 114 form the accommodating cavity 115. The third direction Z is perpendicular to both the first direction X and the second direction Y

In an embodiment, the accommodating cavity 115 runs through the first wall 11 along the second direction Y. This is conducive to reducing the weight of the first wall 11, thereby reducing the influence of the weight of the housing 10 on the battery module 100. In addition, this also facilitates the processing and manufacturing of the first wall 11, thereby helping to improve the processing and manufacturing efficiency of the first wall 11.

In an embodiment, the first side wall 111 is provided with a first stop portion 117. The first part 31 is provided with a first limiting portion 312. The first stop portion 117 and the first limiting portion 312 are arranged along the second direction Y

The battery module 100 includes a second gap 42, and the second gap 42 is located between the first stop portion 117 and the first limiting portion 312; and the first part 31 is configured to be movable along a direction opposite to the second direction Y. When the cell assembly 20 moves relative to the housing 10 along the direction opposite to the second direction Y, the second gap 42 allows the connecting member 30 and the conductive member 22 to move along the direction opposite to the second direction Y, so that the pulling force of the conductive member 22 on the electrode terminal 212 is reduced, and the risk of damage to the electrode terminal 212 is reduced.

In an embodiment, along the second direction Y, a length of the second gap 42 is d2, 0 mm < d2 ≤ 4 mm. This is conducive to meeting the requirement for the movement of the connecting member 30 relative to the first wall 11, and reducing the risk of damage to the electrode terminal 212. In addition, this can also limit the movement of the connecting member 30 relative to the first wall 11, reducing the influence on the electrode terminal 212 from the connecting member 30 shaking relative to the first wall 11.

In an embodiment, 0.5 mm ≤ d2 ≤ 2 mm. This is conducive to further reducing the risk of damage to the electrode terminal 212, reducing a movement range of the connecting member 30 along the direction opposite to the second direction Y, and reducing the influence on the electrode terminal 212 from the connecting member 30 shaking relative to the first wall 11.

In an embodiment, the length d2 of the second gap 42 is any one of 0.2 mm, 0.4 mm, 0.5 mm, 0.6 mm, 0.8 mm, 1 mm, 1.2 mm, 1.4 mm, 1.6 mm, 1.8 mm, 2 mm, 2.2 mm, 2.4 mm, 2.6 mm, 2.8 mm, 3 mm, 3.2 mm, 3.4 mm, 3.6 mm, 3.8 mm, or 4 mm. This is conducive to the connecting member 30 relative to the first wall 11, and reducing the risk of damage to the electrode terminal 212. In addition, this can also limit the movement of the connecting member 30 relative to the first wall 11, reducing the influence on the electrode terminal 212 from the connecting member 30 shaking relative to the first wall 11.

In an embodiment, the first side wall 111 is provided with an opening 1111, and the opening 1111 communicates with the accommodating cavity 115. The first limiting portion 312 is at least partially located in the opening 1111. The first limiting portion 312 and the opening 1111 may fit with each other to form a snap-fitting structure, allowing for formation of a limiting relationship between the first wall 11 and the connecting member 30, and facilitating the assembly of the connecting member 30 and the first wall 11, thereby helping to improve the assembly efficiency of the battery module 100.

In an embodiment, the opening 1111 runs through the first side wall 111 along the first direction X.

In an embodiment, when the first limiting portion 312 moves along the direction opposite to the second direction Y, the first stop portion 117 can limit the movement of the first limiting portion 312.

In an embodiment, the first part 31 includes a second limiting portion 313. The first side wall 111 and the second limiting portion 313 face each other along the first direction X. The first gap 41 is located between the first side wall 111 and the second limiting portion 313. When the cell assembly 20 moves relative to the housing 10 along the direction opposite to the first direction X, the first gap 41 allows the connecting member 30 to move relative to the first side wall 111 along the direction opposite to the first direction X, thereby reducing the pulling force of the conductive member 22 on the electrode terminal 212, helping to further reduce the risk of damage to the electrode terminal 212, and prolonging the service life of the electrode terminal 212.

In an embodiment, the first part 31 includes a third limiting portion 314. The third limiting portion 314 and the third side wall 113 face each other along the first direction X. The first gap 41 is located between the third limiting portion 314 and the third side wall 113. When the cell assembly 20 moves relative to the housing 10 along the first direction X, the first gap 41 allows the connecting member 30 to move relative to the third side wall 113 along the first direction X, thereby reducing the pulling force of the conductive member 22 on the electrode terminal 212, helping to further reduce the risk of damage to the electrode terminal 212, and prolonging the service life of the electrode terminal 212.

In an embodiment, the connecting member 30 includes a second limiting portion 313 and a third limiting portion 314. The first side wall 111, the second limiting portion 313, the third limiting portion 314, and the third side wall 113 are arranged along the first direction X, the first side wall 111 and the second limiting portion 313 facing each other, and the third limiting portion 314 and the third side wall 113 facing each other.

In an embodiment, along the first direction X, a distance between the first side wall 111 and the third side wall 113 is greater than the length of the first part 31.

In an embodiment, the first gap 41 includes two parts, where one part is located between the first side wall 111 and the second limiting portion 313, and the other part is located between the third limiting portion 314 and the third side wall 113. When the cell assembly 20 moves relative to the housing 10, the connecting member 30 can move relative to the first wall 11 along the first direction X or the direction opposite to the first direction X, thereby reducing the pulling force of the conductive member 22 on the electrode terminal 212, helping to further reduce the risk of damage to the electrode terminal 212, and prolonging the service life of the electrode terminal 212.

In an embodiment, along the second direction Y, the second part 36 and the first side wall 111 are arranged and connected to each other. The first side wall 111 can support the connecting member 30 and limit the movement of the connecting member 30 along the second direction Y, which is conducive to reducing shaking amplitudes of the connecting member 30 and the conductive member 22 along the second direction Y, thereby reducing the influence of the shaking of the battery module 100 on the electrode terminal 212.

In an embodiment, along the second direction Y, the second part 36 and the third side wall 113 are arranged and connected to each other. The third side wall 113 can support the connecting member 30 and limit the movement of the connecting member 30 along the second direction Y, which is conducive to reducing the shaking amplitudes of the connecting member 30 and the conductive member 22 along the second direction Y, thereby reducing the influence of the shaking of the battery module 100 on the electrode terminal 212.

In an embodiment, the second part 36 is connected to both the first side wall 111 and the third side wall 113 along the second direction Y. The first side wall 111 and the third side wall 113 are cooperatively connected to the second part 36, which is conducive to improving the support stability of the first wall 11 for the connecting member 30, thereby reducing the influence of the shaking of the battery module 100 on the electrode terminal 212.

In an embodiment, the second part 36 is located outside the accommodating cavity 115, which is conducive to the connection between the conductive member 22 and the second part 36.

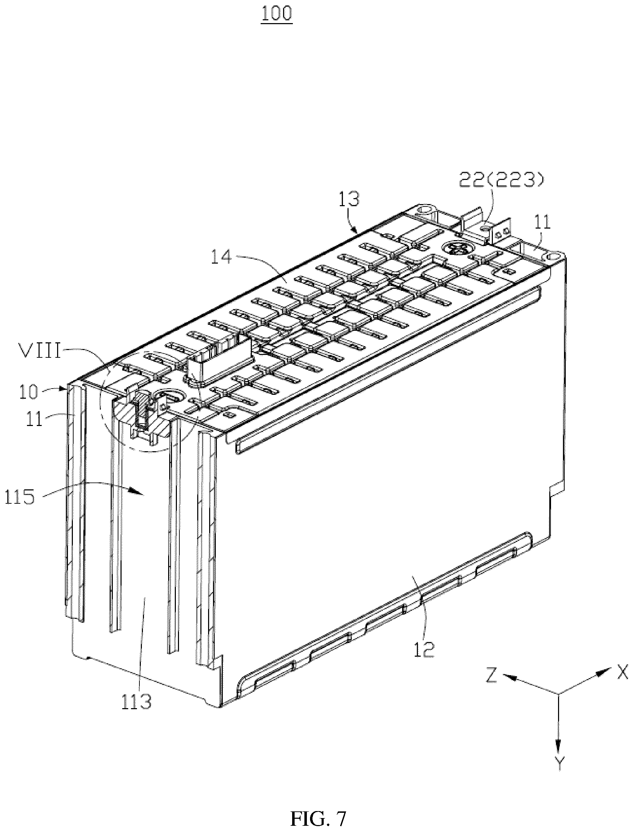

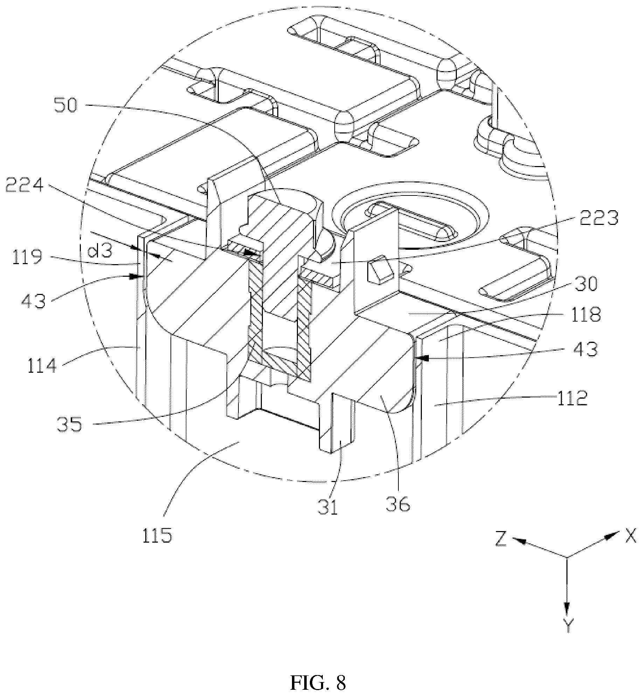

As shown in FIGs. 7 and 8, in an embodiment, the battery module 100 includes a third gap 43. Along the third direction Z, the third gap 43 is located between the connecting member 30 and the first wall 11. When the cell assembly 20 moves relative to the housing 10 along the third direction Z or a direction opposite to the third direction Z, the third gap 43 allows the connecting member 30 and the conductive member 22 to move relative to the first wall 11, so that the pulling force of the conductive member 22 on the electrode terminal 212 is reduced, and the risk of damage to the electrode terminal 212 is reduced.

In an embodiment, along the third direction Z, a length of the third gap 43 is d3, 0 mm < d3 ≤ 4 mm. This is conducive to meeting the requirement for the movement of the connecting member 30 relative to the first wall 11, and reducing the risk of damage to the electrode terminal 212. In addition, this can also limit the movement of the connecting member 30 relative to the first wall 11, reducing the influence on the electrode terminal 212 from the connecting member 30 shaking relative to the first wall 11.

In an embodiment, 0.5 mm ≤ d3 ≤ 2 mm. This is conducive to further reducing the risk of damage to the electrode terminal 212, further reducing a movement range of the connecting member 30 along the third direction Z or the direction opposite to the third direction Z, and reducing the influence on the electrode terminal 212 from the connecting member 30 shaking relative to the first wall 11.

In an embodiment, the length d3 of the third gap 43 is any one of 0.2 mm, 0.4 mm, 0.5 mm, 0.6 mm, 0.8 mm, 1 mm, 1.2 mm, 1.4 mm, 1.6 mm, 1.8 mm, 2 mm, 2.2 mm, 2.4 mm, 2.6 mm, 2.8 mm, 3 mm, 3.2 mm, 3.4 mm, 3.6 mm, 3.8 mm, or 4 mm. This is conducive to the movement of the connecting member 30 relative to the first wall 11, and reducing the risk of damage to the electrode terminal 212. In addition, this can also limit the movement of the connecting member 30 relative to the first wall 11, reducing the influence on the electrode terminal 212 from the connecting member 30 shaking relative to the first wall 11.

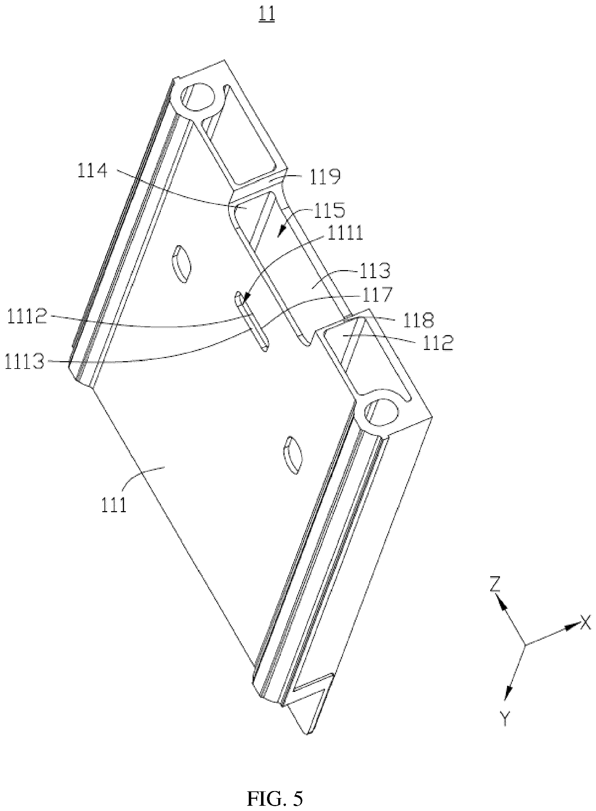

As shown in FIGs. 5 to 8, in an embodiment, the first wall 11 includes a first extension portion 118 and a second extension portion 119 arranged along the third direction Z. The first extension portion 118, the second part 36, and the second extension portion 119 are arranged along the third direction Z. Along the third direction Z, a distance between the first extension portion 118 and the second extension portion 119 is greater than a length of the second part 36, allowing for formation of the third gap 43 between the second part 36 and the first extension portion 118 or between the second part 36 and the second extension portion 119.

In an embodiment, along the third direction Z, the third gap 43 is located between the first extension portion 118 and the second part 36. When the cell assembly 20 moves relative to the housing 10 along the direction opposite to the third direction Z, the third gap 43 allows the connecting member 30 to move relative to the first wall 11 along the direction opposite to the third direction Z, thereby reducing the pulling force of the conductive member 22 on the electrode terminal 212, helping to further reduce the risk of damage to the electrode terminal 212, and prolonging the service life of the electrode terminal 212.

In an embodiment, along the third direction Z, the third gap 43 is located between the second part 36 and the second extension portion 119. When the cell assembly 20 moves relative to the housing 10 along the third direction Z, the third gap 43 allows the connecting member 30 to move relative to the first wall 11 along the third direction Z, thereby reducing the pulling force of the conductive member 22 on the electrode terminal 212, helping to further reduce the risk of damage to the electrode terminal 212, and prolonging the service life of the electrode terminal 212.

In an embodiment, the third gap 43 includes two parts, where one part is located between the first extension portion 118 and the second part 36, and the other part is located between the second part 36 and the second extension portion 119. When the cell assembly 20 moves relative to the housing 10, the connecting member 30 can move relative to the first wall 11 along the third direction Z or the direction opposite to the third direction Z, thereby reducing the pulling force of the conductive member 22 on the electrode terminal 212, helping to further reduce the risk of damage to the electrode terminal 212, and prolonging the service life of the electrode terminal 212.

In an embodiment, the first extension portion 118 extends from the second side wall 112, which is conducive to limiting the connecting member 30.

In an embodiment, the second extension portion 119 extends from the fourth side wall 114, which is conducive to limiting the connecting member 30.

In an embodiment, the connecting member 30 is made of plastic. This is conducive to reducing the weight of the connecting member 30, thereby reducing the influence of the weight of the connecting member 30 on the battery module 100. In addition, this can also provide insulation, reducing the risk of short circuit in the cell assembly 20, thereby improving the safety performance of the battery module 100.

In an embodiment, the connecting member 30 is formed by plastic molten by injection molding equipment and then cured, which is conducive to simplifying the processing technology of the connecting member 30, reducing the processing and manufacturing costs of the connecting member 30, and reducing the influence on the battery module 100 from the manufacturing costs of the connecting member 30.

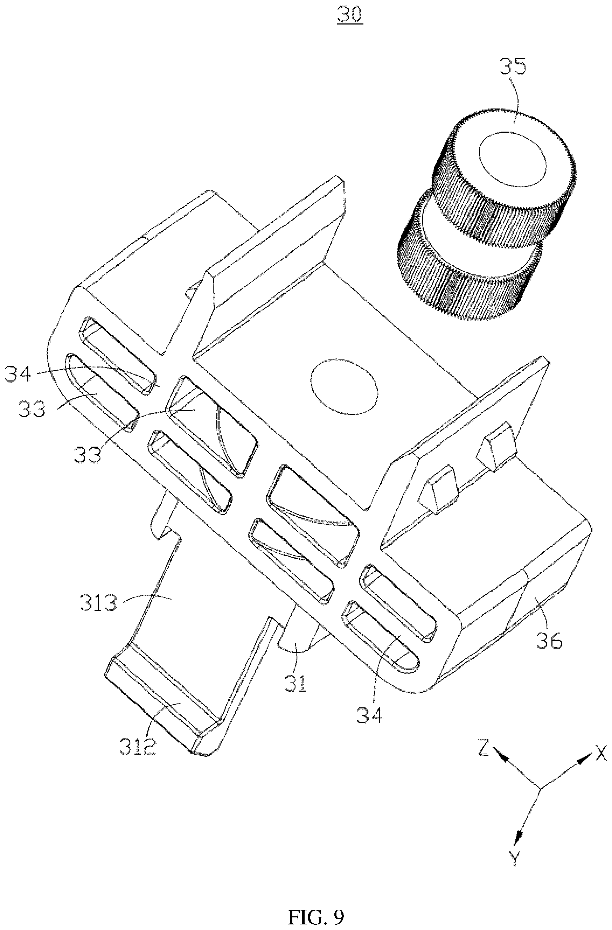

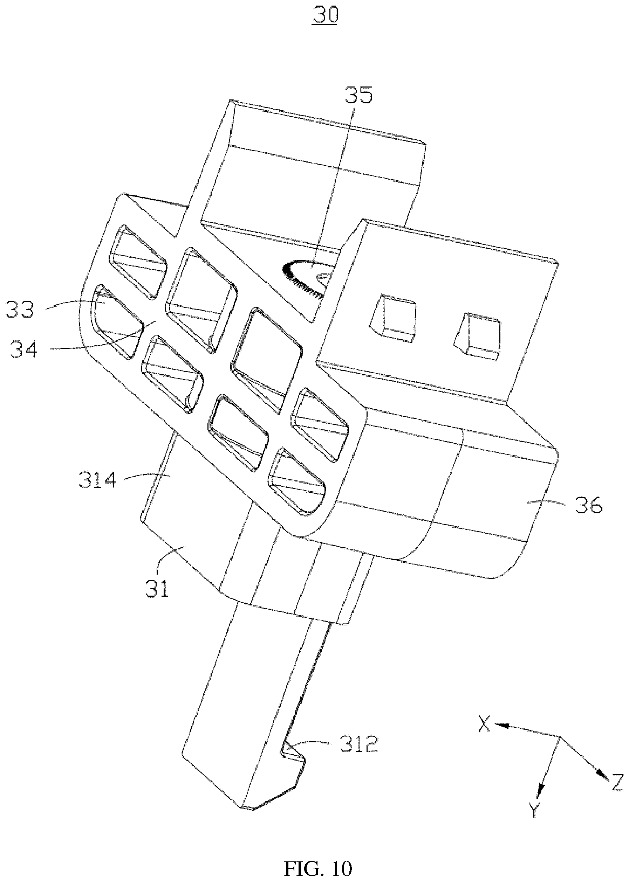

As shown in FIGs. 2, 4, 9, and 10, in an embodiment, the battery module 100 further includes a fastener 50, and the fastener 50 connects the conductive member 22 and the second part 36, which is conducive to improving the stability of the connection between the conductive member 22 and the connecting member 30, thereby improving the shock resistance of the battery module 100.

In an embodiment, the fastener 50 is a screw, the conductive member 22 is provided with a first through hole 224, and a portion of the screw is connected to the second part 36 after passing through the first through hole 224. This is conducive to improving the stability of the connection between the conductive member 22 and the connecting member 30. In addition, this also facilitates the assembly, thereby helping to improve the assembly efficiency.

In an embodiment, the connecting member 30 includes a nut 35, and the screw is connected to the nut 35, which is conducive to improving the stability of the connection between the conductive member 22 and the connecting member 30, thereby improving the shock resistance of the battery module 100.

In an embodiment, the nut 35 is pre-embedded in the connecting member 30 by the injection molding equipment, which is conducive to simplifying the processing and manufacturing process of the connecting member 30, and improving the manufacturing efficiency of the connecting member 30. In an embodiment, the nut 35 is disposed in the connecting member 30 by a hot pressing process.

In an embodiment, the connecting member 30 is further provided with a recess 33. The recess 33 is conducive to reducing the weight of the connecting member 30, thereby reducing the influence of the weight of the connecting member 30 on the battery module 100. The recess 33 is also conducive to alleviating the shrinkage of the connecting member 30 after injection molding, thereby alleviating undesirable appearance of the connecting member 30. The recess 33 is further conducive to increasing the creepage distance and electrical gap of the conductive member 22 passing through the connecting member 30, thereby improving the safety performance of the battery module 100.

In an embodiment, the recess 33 is recessed along the first direction X. Along the first direction X, a minimum depth of the recess 33 is greater than 1 mm, which is conducive to increasing the creepage distance and electrical gap of the conductive member 22 passing through the connecting member 30, thereby improving the safety performance of the battery module 100.

In an embodiment, the connecting member 30 is further provided with a plurality of recesses 33. This is conducive to reducing the weight of the connecting member 30, thereby alleviating the shrinkage of the connecting member 30 after injection molding, and alleviating undesirable appearance of the connecting member 30. In addition, this is conducive to increasing the creepage distance and electrical gap of the conductive member 22 passing through the connecting member 30, thereby improving the safety performance of the battery module 100.

In an embodiment, the recess 33 is recessed along the direction opposite to the first direction X.

In an embodiment, the recess 33 runs through the connecting member 30 along the first direction X to form a through hole. This is conducive to increasing the creepage distance and electrical gap of the conductive member 22 passing through the connecting member 30, thereby improving the safety performance of the battery module 100. In addition, this also facilitates the processing and manufacturing of the connecting member 30, thereby improving the manufacturing efficiency of the connecting member 30.

In an embodiment, the connecting member 30 is further provided with a rib portion 34, where the rib portion 34 is connected to a side wall of the recess 33. The rib portion 34 is conducive to improving the structural rigidity and strength of the connecting member 30, thereby reducing the risk of deformation or damage to the connecting member 30. In addition, the rib portion 34 is also conducive to increasing the creepage distance of the conductive member 22 passing through the connecting member 30, thereby improving the safety performance of the battery module 100.

In an embodiment, a minimum width of the rib portion 34 is greater than 1 mm, which is conducive to ensuring both the structural strength and creepage distance of the connecting member 30, and reducing the influence of the rib portion 34 on the weight of the connecting member 30.

In an embodiment, the rib portion 34 is provided in plurality, which is conducive to improving the structural rigidity and strength of the connecting member 30, and increasing the creepage distance of the conductive member 22 passing through the connecting member 30, thereby improving the safety performance of the battery module 100.

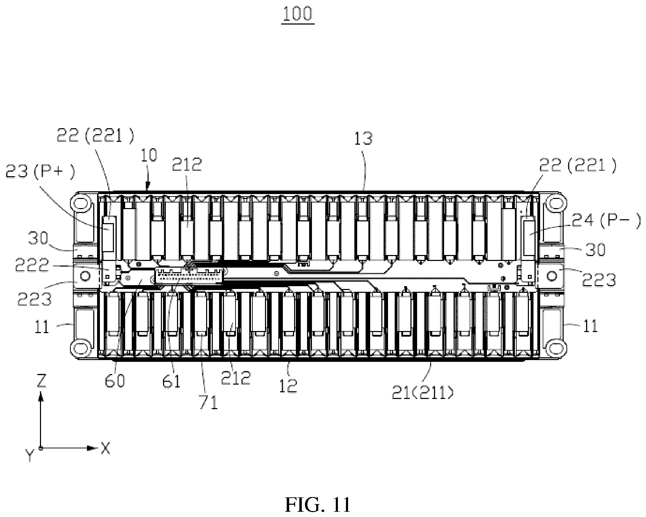

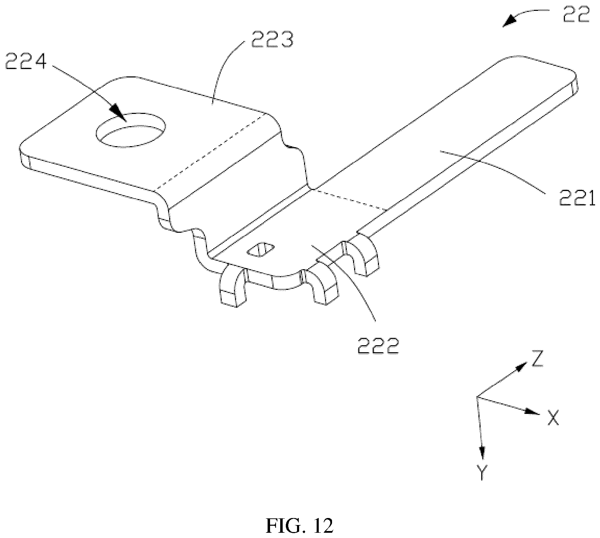

As shown in FIGs. 11 and 12, in an embodiment, the conductive member 22 includes a first segment 221, a second segment 222, and a third segment 223. The second segment 222 connects the first segment 221 and the third segment 223. The first segment 221 is connected to the electrode terminal 212, and the third segment 223 is connected to the connecting member 30.

In an embodiment, along the first direction X, a projection of the first segment 221 and a projection of the third segment 223 are spaced apart from each other. When the cell 21 swells or moves relative to the housing 10, the deformation of the second segment 222 can buffer the interaction force between the first segment 221 and the third segment 223, reducing the pulling force between the first segment 221 and the third segment 223, and reducing the pulling force of the first segment 221 on the electrode terminal 212, thereby helping to reduce the influence of the swelling or shaking of the cell 21 on the electrode terminal 212, and prolonging the service life of the electrode terminal 212.

In an embodiment, along the second direction Y, the projection of the first segment 221 and the projection of the third segment 223 are spaced apart from each other. When the cell 21 swells or moves relative to the housing 10, the deformation of the second segment 222 can buffer the interaction force between the first segment 221 and the third segment 223, reducing the pulling force between the first segment 221 and the third segment 223, and reducing the pulling force of the first segment 221 on the electrode terminal 212, thereby helping to reduce the influence of the swelling or shaking of the cell 21 on the electrode terminal 212, and prolonging the service life of the electrode terminal 212.

In an embodiment, along the third direction Z, the projection of the first segment 221 and the projection of the third segment 223 are spaced apart from each other. When the cell 21 swells or moves relative to the housing 10, the deformation of the second segment 222 can buffer the interaction force between the first segment 221 and the third segment 223, reducing the pulling force between the first segment 221 and the third segment 223, and reducing the pulling force of the first segment 221 on the electrode terminal 212, thereby helping to reduce the influence of the swelling or shaking of the cell 21 on the electrode terminal 212, and prolonging the service life of the electrode terminal 212.

In an embodiment, a material of the conductive member 22 includes but is not limited to any one of copper or copper alloy. This is conducive to improving the current capacity of the conductive member 22, reducing the impedance of the conductive member 22, and reducing the temperature rise of the conductive member 22. In addition, this also facilitates the deformation of the conductive member 22 to buffer the pulling force of the conductive member 22 on the electrode terminal 212, prolonging the service life of the electrode terminal 212.

As shown in FIGs. 1 to 4 and FIG. 11, in an embodiment, the battery module 100 includes two first walls 11 and two connecting members 30, where the two first walls 11 are arranged along the first direction X, and the cell assembly 20 is located between the two first walls 11.

Along the first direction X, in the first cell 21 and the last cell 21, a positive electrode terminal 212 of one cell 21 is a positive terminal 23 (P+) of the cell assembly 20, and a negative electrode terminal 212 of the other cell 21 is a negative terminal 24 (P-) of the cell assembly 20.

The cell assembly 20 includes two conductive members 22, where the two conductive members 22 are respectively located at two ends of the cell assembly 20 along the first direction X. The first segment 221 of one conductive member 22 is connected to the positive terminal 23, and the first segment 221 of the other conductive member 22 is connected to the negative terminal 24.

Each conductive member 22 is connected to one connecting member 30 adjacent thereto. The first part 31 of each connecting member 30 is located in the accommodating cavity 115 of one first wall 11 adjacent thereto.

Along the first direction X or the direction opposite to the first direction X, when the cell assembly 20 swells or moves relative to the housing 10, the cell assembly 20 is connected to the first walls 11 on two sides through the two conductive members 22 and the two connecting members 30. This is conducive to reducing the pulling force of the conductive member 22 on the positive terminal 23 and the negative terminal 24, reducing the risk of damage to the positive terminal 23 and the negative terminal 24, and prolonging the service life of the positive terminal 23 and negative terminal 24.

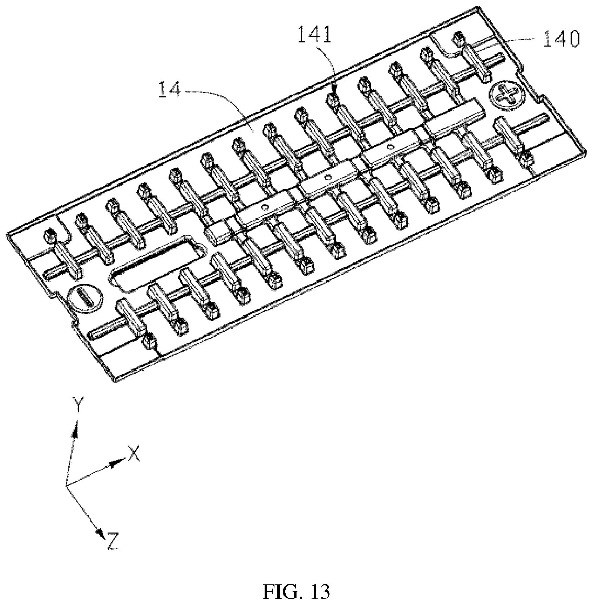

As shown in FIGs. 1 to 3 and FIG. 13, in an embodiment, the battery module 100 further includes a circuit board 60 and a sampling terminal 71, where the sampling terminal 71 is disposed on the circuit board 60, and the circuit board 60 and the cell housing 211 are arranged along the second direction Y. The sampling terminal 71 is electrically connected to electrode terminals 212 of different cells 21 and is configured to collect electrical signal information of the different cells 21.

In an embodiment, the second segment 222 is connected to the circuit board 60, and the circuit board 60 can collect electrical signal information of the conductive member 22.

In an embodiment, the electrical signal information includes but is not limited to at least one of voltage, current, resistance, or temperature.

In an embodiment, the circuit board 60 includes a BMS (Battery Management System, BMS for short) assembly, where the BMS assembly includes a plurality of electronic components. The plurality of electronic components can realize functions of data acquisition, control, protection, communication, electric quantity calculation, signal transmission, electrical energy transmission, and the like of the cell 21.

In an embodiment, the circuit board 60 includes a printed circuit board (Printed Circuit Board, PCB for short).

In an embodiment, the circuit board 60 includes a flexible circuit board (Flexible Circuit Board, FCB for short).

In an embodiment, the housing 10 further includes a second wall 12, a third wall 13, a fourth wall 14, and a fifth wall 15. The second wall 12, the cell assembly 20, and the third wall 13 are arranged along the third direction Z. The fourth wall 14, the cell assembly 20, and the fifth wall 15 are arranged along the second direction Y The second wall 12, the third wall 13, the fourth wall 14, and the fifth wall 15 are all connected to the two first walls 11.

In an embodiment, the battery module 100 includes a plug connector 61 disposed on the circuit board 60. Along the direction opposite to the second direction Y, a portion of the plug connector 61 runs through the fourth wall 14 and extends beyond the fourth wall 14, facilitating the connection of the plug connector 61 to an external device, and allowing the battery module 100 to be electrically connected to the external device.

In an embodiment, the plug connector 61 is electrically connected to the sampling terminal 71.

In an embodiment, at least one of the first wall 11, the second wall 12, the third wall 13, the fourth wall 14, or the fifth wall 15 is made of plastic. This is conducive to reducing the weight of the housing 10, thereby reducing the influence of the weight of the housing 10 on the battery module 100. In addition, this can also provide insulation, reducing the risk of short circuit in the cell assembly 20, thereby improving the safety performance of the battery module 100.

In an embodiment, at least one of the first wall 11, the second wall 12, the third wall 13, the fourth wall 14, or the fifth wall 15 is formed by plastic that is molten by the injection molding equipment and then cured, which is conducive to simplifying the processing technology of the housing 10, reducing the processing and manufacturing costs of the housing 10, and reducing the influence on the battery module 100 from the manufacturing costs of the housing 10.

In an embodiment, at least one of the first wall 11, the second wall 12, the third wall 13, the fourth wall 14, or the fifth wall 15 is made of metal, which is conducive to improving the structural strength and rigidity of the housing 10 and reducing the risk of deformation or damage to the housing 10.

In an embodiment, the battery module 100 includes an insulator (not shown in the figure), where the insulator is disposed in a gap between the housing 10 and the cell assembly 20.

In an embodiment, the insulator is formed by a flowable insulating material that is provided inside the housing 10 and then cured.

In an embodiment, the insulating material includes but is not limited to a foam adhesive, a potting adhesive, and an insulating material molten by heating.

In an embodiment, the electrode terminal 212 is adhered to the housing 10 through the insulator.

In an embodiment, the fourth wall 14 is provided with an isolation portion 140. The isolation portion 140 is located between sealing portions 2111 of adjacent cells 21, which is conducive to enhancing the insulation between different cells 21.

In an embodiment, the fourth wall 14 is provided with a second through hole 141. Along the second direction Y, the second through hole 141 runs through the fourth wall 14. The second through hole 141 is configured to injection of the insulating material into the housing 10.

In conclusion, in the battery module 100 of this application, the first part 31 of the connecting member 30 is disposed in the accommodating cavity 115 of the first wall 11, and the second part 36 is connected to the electrode terminal 212 through the conductive member 22, so that when the cell assembly 20 moves relative to the housing 10, the pulling force of the conductive member 22 on the electrode terminal 212 is reduced, the risk of damage to the electrode terminal 212 is reduced, and the influence on an electric device 200 from the damage to the electrode terminal 212 is reduced.

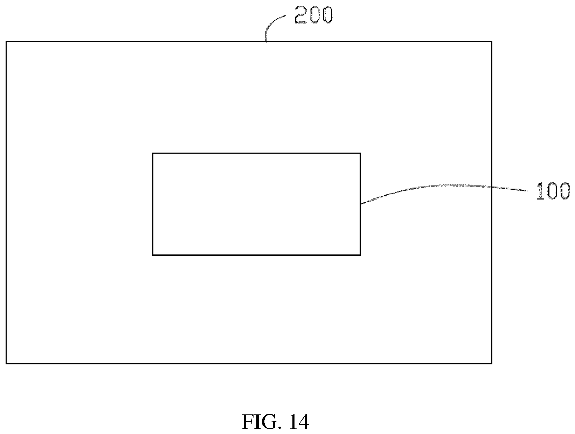

As shown in FIG. 14, an embodiment of this application further provides an electric device 200 including the battery module 100 according to any one of the foregoing embodiments.

In the foregoing electric device 200, for the battery module 100, the first part 31 of the connecting member 30 is disposed in the accommodating cavity 115 of the first wall 11, and the second part 36 is connected to the electrode terminal 212 through the conductive member 22, so that when the cell assembly 20 moves relative to the housing 10, the pulling force of the conductive member 22 on the electrode terminal 212 is reduced, the risk of damage to the electrode terminal 212 is reduced, and the influence on the electric device 200 from the damage to the electrode terminal 212 is reduced.

In an embodiment, the electric device 200 includes but is not limited to a drone, an electric two-wheeler, a household appliance, and an electric tool.

The foregoing descriptions are merely specific some embodiments of this application, but the protection scope of this application is not limited thereto. Any variations or replacements within the technical scope disclosed in this application should be included within the disclosure scope of this application.

## Claims

1. A battery module (100), comprising:
a housing (10) comprising a first wall (11), wherein the first wall (11) is provided with an accommodating cavity (115);
a connecting member (30) comprising a first part (31) and a second part (36) connected to each other, wherein the first part (31) is disposed in the accommodating cavity (115); and
a cell assembly (20), the cell assembly (20) comprises a conductive member (22) and a plurality of cells (21), each cell (21) comprises an electrode terminal (212), and the conductive member (22) connects the electrode terminal (212) of one of the plurality of cells to the second part (36); wherein
the first part (31) is configured to be movable in the accommodating cavity (115).

2. The battery module (100) according to claim 1, wherein the battery module (100) comprises a first gap (41); the first wall (11) comprises a first side wall (111) and a third side wall (113) arranged along a first direction (X); and along the first direction (X), the first gap (41) is located between the first part (31) and the first side wall (111), and/or between the first part (31) and the third side wall; and
the first part (31) is configured to be movable in the accommodating cavity (115) along the first direction (X) or a direction opposite to the first direction (X).

3. The battery module (100) according to claim 2, wherein along the first direction (X), a length of the first gap (41) is d1, and 0 mm < d1 ≤ 4 mm.

4. The battery module (100) according to claim 3, wherein 0.5 mm ≤ d1 ≤ 2 mm.

5. The battery module (100) according to any one of claims 1 to 4, wherein the first wall (11) is provided with a first stop portion (117);
the connecting member (30) is provided with a first limiting portion (312); and the first stop portion (117) and the first limiting portion (312) are arranged along a second direction (Y); and
the battery module (100) comprises a second gap (42), and the second gap (42) is located between the first stop portion (117) and the first limiting portion (312); and the first part (31) is configured to be movable along a direction opposite to the second direction (Y).

6. The battery module (100) according to claim 5, wherein in the second direction (Y), a length of the second gap (42) is d2, and 0 mm < d2 ≤ 4 mm.

7. The battery module (100) according to claim 6, wherein 0.5 mm ≤ d2 ≤ 2 mm.

8. The battery module (100) according to any one of claims 1 to 7, wherein the second part (36) is located outside the accommodating cavity (115); and
the battery module (100) comprises a third gap (43); the first wall (11) comprises a first extension portion (118) and a second extension portion (119) arranged along a third direction (Z); the third gap (43) is located between the second part (36) and the first extension portion (118), and/or between the second part (36) and the second extension portion (119);
the connecting member (30) is configured to be movable along the third direction (Z) or a direction opposite to the third direction (Z).

9. The battery module (100) according to claim 8, wherein along the third direction (Z), a length of the third gap is d3, and 0 mm < d3 ≤ 4 mm.

10. The battery module (100) according to any one of claims 1 to 9, wherein the battery module (100) further comprises a fastener (50), and the fastener (50) connects the conductive member (22) and the second part (36).

11. The battery module (100) according to any one of claims 1 to 10, wherein the first wall (11) and the cell assembly (20) are arranged along a first direction (X); and the plurality of cells (21) are arranged along the first direction (X);
the each cell (21) comprises a cell housing (211) and an electrode assembly, the cell housing (211) comprises a body portion (2110) and a sealing portion (2111), and the electrode terminal (212) is connected to the electrode assembly and extends out of the cell housing (211) from the sealing portion (2111); and
the conductive member (22) is connected to the electrode terminal (212) in a stacking manner.

12. The battery module (100) according to claim 11, wherein the conductive member (22) comprises a first segment (221), a second segment (222), and a third segment (223); the second segment (222) connects the first segment (221) and the third segment (223);
the first segment (221) is connected to the electrode terminal (212) of the one of the plurality of cells; the one of the plurality of cells being a cell (21) closest to the first wall (11); and the third segment (223) is connected to the second part (36); and
along the first direction (X), a projection of the first segment (221) and a projection of the third segment (223) are spaced apart from each other.

13. The battery module (100) according to claim 12, wherein the battery module (100) further comprises a circuit board (60) and a sampling terminal (71), the sampling terminal (71) is connected to the circuit board (60), and the sampling terminal (71) is connected to the electrode terminal (212); and
the second segment (222) is connected to the circuit board (60).

14. The battery module (100) according to any one of claims 1 to 13, wherein the battery module (100) includes two first walls (11) and two connecting members (30), the two first walls (11) are arranged along the first direction (X), and the cell assembly (20) is located between the two first walls (11);
the cell assembly (20) includes two conductive members (22), the two conductive members (22) are respectively located at two ends of the cell assembly (20) along the first direction (X); each conductive member (22) is connected to one connecting member (30), and the first part (31) of each connecting member (30) is located in an accommodating cavity (115) of a first wall (11).

15. An electric device, comprising the battery module (100) according to any one of claims 1 to 14.
